# EUROPEAN PATENT SPECIFICATION

(11) **EP 4 508 623 B1**
(45) Date of publication and mention of the grant of the patent: **25.02.2026**
(21) Application number: 23720039.9
(22) Date of filing: 06.04.2023
(51) Int. Cl.: G09B 9/02

(54) **A MOVEMENT PLATFORM SYSTEM**
BEWEGUNGSPLATTFORMSYSTEM
SYSTÈME DE PLATEFORME DE MOUVEMENT

(30) Priority: 11.04.2022 NL 2031548
(43) Date of publication of application: 19.02.2025
(73) Proprietor: E2M Technologies B.V., 1086 XP Amsterdam (NL)
(72) Inventor: VERSLUIS, Eric Willem Leendert, 1086 XP Amsterdam (NL); VAN SPAANDONK, Victor, 1086 XP Amsterdam (NL); VELTENA, Marinus Cornelis Christiaan, 1086 XP Amsterdam (NL); AL ZAHER, Rabih, 1086 XP Amsterdam (NL); WEVER, Jacobus Wilhelmus Maria, 1086 XP Amsterdam (NL)
(74) Representative: de Cock, Eric Hubertus Augusta
(86) International application number: PCT/EP2023/059232
(87) International publication number: WO 2023/198621

(56) References cited:
- CN-B- 102 176 290
- GB-A- 2 585 945
- US-B2- 9 109 743

## Description

The invention is directed to a movement platform system comprising a base, a platform movable relative to said base and allowing an infinite rotational movement. The system is comprised of an endless rail following a closed curve to which rail a number of motors is movably connected. The motors are in turn connected to the movable platform by means of push-pull rods.

WO2017/202920 describes a movement platform system, comprising a base and a platform movable along 6 degrees of freedom relative to said base. The base and platform are connected by eight actuators. This system is considered to be overdetermined because the number of constraints, i.e. the length of each of the at least eight actuators as a function of the location of the joints at both sides, is larger than the number of degrees of freedom, namely the 6 degrees of freedom of the platform system.

Movement platforms which are movable relative to a base and allowing an infinite yaw movement as the infinite rotational movement are known from US9109743. This publication describes a movement platform which can move along 6 degrees of freedom. Six electrical motors are disclosed which can run along a circular rail. Each motor is connected to the platform by a rod.

US2012/0286123 describes a movement platform which can move along 6 degrees of freedom and allowing an infinite yaw movement. Six supports are each connected to a movable ring. The rings are co-centrally stacked and can rotate independently from each other. The rotation of the rings is by means of an externally positioned electrical motor which engages with the rings by means of a rack and pinion.

US6196081 describes a movement platform which can move along 6 degrees of freedom. Six electrical motors are disclosed which can run along one or more circular tracks.

GB2585945 describes a motion platform system comprising a base, a platform movable relative to said base and allowing an infinite rotational movement. The system is comprised of an endless circular rail. In one embodiment 6 motors are connected to the rail and wherein a pair of motors are connected to a control pillar by means of an in length controllable actuator. By moving the control pillar in the x-y plane the platform moves in the z-direction along a guide angled with respect to the x-y plane via a coupling. The angled guides result in a fixed gearing. This embodiment requires 12 motors. In another embodiment 9 motors are connected to the circular rail to control 3 control pillars. One control pillar is connected to three motors by an in length adjustable cable. Each motor on the rail is thus further provided with a cable winding motor. This embodiment thus requires 18 motors. A disadvantage of the described motion platform system is the high number of motors making the system complex. Each motor requires a separate power unit, encoder and requires additional hardware such as cable routing. Further the motors are used in series which adds to the complexity of the system in terms of control of the system as it will be necessary to tune motors in series with possibly different types of feedback sensors and different motor characteristics. The stacking of motors also critically deteriorates the compliance of the overall control loop. A further disadvantage is that the use of angled guides result in a fixed gearing between heave movement and the control pillar movement.

An advantage of a platform having an infinite rotational movement is the ability to simulate a long duration movement in one direction. A disadvantage of the prior art movement platforms is either their complexity or their low stability and smaller workspace making them less suited for applications like automotive driving simulation. The present invention aims at providing a simple movement system having a higher stability which can be used for simulating a wide range of maneuvers over a larger workspace, with a higher bandwidth thus providing a more realistic and accurate simulation of the actual vehicle driving on the road or race track.

This is achieved by an overdetermined movement platform system according to claim 1.

Applicants found that an overdetermined movement platform provides advantages over a movement platform system implemented with six motors as for example described in prior art publication US6196081 in terms of the ability to carry higher payloads, increased acceleration and/or higher stiffness. This further allows a higher control bandwidth and a mechanically safe design where the platform will not collapse or touch the floor when individual motors are at extreme distances of separation. Further a redundant system is obtained having a one-fold redundancy and in some situations even a two-fold redundancy. By one-fold and two-fold redundancy is meant that when a motor or push-pull rod would fail the remaining seven or respective six motors and or push-pull rods would still be able to fully control the platform and optionally bring the platform to a safe position. Additionally, there are advantages of the overdetermined system in terms of increased usable workspace of the simulator compared to the conventional six motor system. Adding motors and rods as in the present invention results in an overdetermined system and results in a smaller motion envelope. Applicants found that the movement platform system of this invention nevertheless results in a larger and more symmetric workspace while maintaining stability in a larger portion of its motion envelope. This may be explained by the fact that through the use of two endless rails it is possible to decouple the platform degrees of freedom between the rails, for example heave and roll, or pitch and sway, etc., allowing for larger simultaneous excursions of the platform in multiple degrees of freedom compared to the prior art system.

The movement platform of this invention is further less complex as it makes use of eight motors, which are similar. Further one motor directly moves one push pull rod thereby avoiding motor and actuators or motor and cables in series. This is considerably less motors than the number of motors described in earlier referred to prior art publication GB2585945. Further the platform system has variable gearing depending on the platform pose. By prepositioning of the platform, more acceleration or velocity performance can be exploited which is less possible with the platform of the prior art publication GB2585945.

Furthermore, the extra motor-rod combination or combinations can be used to choose a force distribution between the motor-rod combinations, taken from the infinite solution space, for which a force fight exists. This can be used to apply a pre-load on the push pull rods. Such a pre-load can avoid so-called zero force crossings in the push pull rods. This prevents the movement through the backlash of the mechanical components. By avoiding the movement through the backlash of certain components, the non-linearity of the stiffness of the movement platform system can be reduced. This enables a larger control bandwidth.

The base or bases is a stationary element typically connected directly or indirectly to the earth. The base may be a vertical wall to which the two or more endless rails are connected. The base may also be two spaced apart vertical walls each connected to an endless rail. The endless rails connected to the vertical walls will then run in a substantially vertical plane. The infinite rotation may then be an infinite roll or an infinite pitch movement.

The base may also be two spaced apart horizontal stationary elements, for example a base directly connected to a floor and a ceiling as the spaced apart base. The endless rails connected to the floor base and ceiling base will then run in a substantially horizontal plane. Preferably a single base is used connected to the floor wherein the two endless rails are connected to this single base. The infinite rotation when such a base or bases is used will be an infinite yaw movement.

The movement platform may be described in terms of a set of mathematical equations, where the number of equations match the number of constraints. For this system the number of constraints will be eight or more which is equal to the number of movable motors along the endless rails. For the movement platform system of the present invention the number of equations is six because of the six degrees of freedom. The system is overdetermined because the number of constraints is larger than the number of degrees of freedom. Such an overdetermined system may have multiple mathematical solutions for a single movement while a determined system will always have a single mathematical solution for a given movement.

The motion of the movement platform is defined by six degrees of freedom of the platform system. The platform motion is generated by changing the position of the motors. Since the system has more motors than degrees of freedom, as individual motor positions are changed force imbalance will be generated in the system due to limitations in sensor accuracy, mechanical misalignments, losses in drives, friction in joints and other attributes of the motion platform and its control system.

A consequence of the overdetermined system is that, depending on the orientation of the eight or more motors with respect to the platform, patterns of relative push-pull rod force exist which merely deforms the platform. This is referred to as a force-fight. To avoid or minimize such a force fight it is preferred that the movement platform system is provided with a controller which (a) is configured to adapt a demanded platform movement set-point to a commanded platform movement set-point, (b) is configured to move the eight or more motors such that the commanded platform movement set-point is achieved and (c) is configured to dynamically redistribute the forces as exercised by the motors and their connected push-pull rods on the platform between the motors.

The commanded and demanded platform movement set-point may be a platform position set-point. Preferably the commanded and demanded platform movement set-point is a commanded and demanded set-point for platform position, velocity and acceleration.

The demanded platform movement set-point may be the output of a simulation program or host of for example the driving simulation program or of a flight simulation program. The demanded movement set-point may be directly provided from a simulation program or host or may be the output of a motion cueing filter. Such a motion cueing filter may minimize movements which do not contribute to the desired motion cueing experience.

The controller and especially part (c) of the controller is based on a local linearization of the movement platform system equations of motion. The stability of this controller may be unfavorable outside the performance limits due to non-linearity of the system outside the performance limits. Furthermore, external forces, such as end stop damper forces, may act on the motors which are not modelled or timed incorrectly. For these reasons it is preferred to use a controller comprising of a guidance module configured to adapt a demanded platform movement set-point to a commanded platform movement set-point by a counter movement, also referred to as an additional corrective movement, and configured to calculate a force-fight set-point wherein the counter movement and force-fight set-point are derived from a model predictive control algorithm which uses a cost-minimizing control strategy. The platform system suitably has predetermined performance limits comprising of platform and motor domain limits and wherein the model predictive control algorithm uses a cost-minimizing control strategy which is configured to keep the system within its platform and motor performance limits.

The counter movements of the platform aims to let the platform and motors stay within their performance limits. The generation of a force-fight set-point results in a better load balance between the push-pull rods such that motor current constraints are not exceeded, or such that motor currents are optimized. The force-fight set-point may in most situations be zero. The force fights set-point may deviate from zero when for example an individual push-pull rod exceeds a predetermined force and/or when an individual motor and push-pull rod combination would have a predetermined and defined near zero velocity and force set-point. It has been found when an individual motor and push-pull rod combination has a near zero velocity and force set-point an unstable system may be obtained which could result in undesirable vibrations. By allowing a small force fight, such undesired vibrations may be avoided.

The number of motors for the overdetermined system of this invention is eight or more. Above eight motors one, two or more motors may be added to each or both of the endless rails. These additional motors are preferably connected to the platform by means of a push-pull rod. Extra motors may also be present on a third or even fourth additional endless rail which are connected to the same base or bases. Such additional motors may be advantageous to further increase the force which can be exercised on the platform. Preferably two endless rails are present wherein to each endless rail four motors are movably connected. This is advantageous because it introduces the least complexity to the system.

An endless rail is defined in that the motor can move in both directions along a preferably closed curve in a plane. In this way the motor can move in one direction from a starting position and return to its starting position. The closed curve shape may be an oval, preferably an ellipse and more preferably a circle. Small deviations from a circular shape may be possible.

The eight or more motors may be present on two endless rails. Preferably eight motors are present on two endless rails wherein four motors are movably connected to the first endless rail and the four remaining motors are movably connected to the second endless rail. In a further preferred embodiment the eight motors are movably connected to two circular shaped endless rails having a center and wherein the two endless rails run in the same plane or a parallel plane. A common axis runs through both centers in a direction perpendicular to the plane or planes. When the two endless rails have different diameters and are connected to the same base an inner and outer rail are defined. The inner rail or its vertical projection will then suitably run within the outer rail. Four or more motors are then movably connected to the inner rail and four or more motors are movably connected to the outer rail.

In a first embodiment the movement platform system having an inner endless rail and an outer endless rail is connected to one single base. Suitably the distance between the single base and the plane in which the inner rail runs is larger than the distance between the base and the plane in which the outer rail runs. This reduces the chance that push-pull rods connected to motors running on the inner rail collide with push-pull rods connected to motors running on the outer rail.

In a second embodiment of a movement platform system the two endless rails are connected to two separate bases. The base consists of a first and a second base. The movable platform is positioned between the first and second base and the first base is connected to a first endless rail and the second base is connected to a second endless rail. The first base may for example be a floor and the second base may be a ceiling of a building or a framework connected to said floor. Such an embodiment is advantageous because it avoids collision between the rods, will have a larger workspace and be more stable.

The eight or more motors are individually connected to the platform by means of a push-pull rod. The eight or more push pull rods are suitably connected to the platform at spaced apart positions on the platform enabling movement of the platform. Preferably four spaced apart connection regions are present on the platform wherein at each region two rods connect to the platform. These first, second, third and fourth regions on the platform are preferably oriented with respect to each other in that an imaginary line connecting the first and third region crosses an imaginary line connecting the second and fourth region directly or in their projection on the platform.

Preferably these lines cross each other perpendicularly. Preferably the distance between the first and third connection region is smaller than the distance between the second and fourth connection region. This may be achieved by providing a platform with the shape of a rhombus and wherein the first, second, third and fourth connection region of the platform are at the corners of the rhombus. Such a platform is suitably provided with a seat for a driver defining a driving direction for the driver which is in line with a line running from the second and fourth connection region. By having a simulated driving direction along this longer line the motion platform workspace is optimized for applications such as motorsport driving simulators by having an improved field of view.

For the first and second embodiments described above the platform suitably has the four connection regions described above which are spaced apart from each other on the platform and wherein
two adjacently positioned motors on a first endless rail of the two endless rails are each connected by means of a push-pull rod to the second connection region of the platform,
two remaining adjacently positioned motors on the first endless rail are each connected by means of a push-pull rod to the fourth connection region of the platform and
two adjacently positioned motors on a second endless rail of the two endless rails are each connected by means of a push-pull rod to the first connection region of the platform,
two remaining adjacently positioned motors on the second endless rail are each connected by means of a push-pull rod to the third connection region of the platform. This setup allows large combined surge and sway movements while maintaining stability and avoiding collisions between push-pull rods.

The push-pull rod is a stiff element. Preferably the push-pull rod is made of light weight, high stiffness material such as metal alloys and more preferably carbon fiber.

The push-pull rod is connected at one end to a motor and at its opposite end connected to the platform. One motor connects to the platform via a single push-pull rod. The connections between push-pull rod and motor and between the push-pull rod and the platform are such that the 6 degrees of freedom movement of the platform is possible. The connections are by means of joints. When certain surge and sway excursions are required for the platform, joints are required with a wide motion range. Besides joint range the joint preferably has sufficient joint stiffness.

Preferably the push-pull rod is connected to the motor by means of a lower joint having two or more degrees of freedom. Examples of possible joints are ball joints, universal joints and compliant joints. Preferred combinations for upper and lower joints are two ball joints, a ball joint and a universal joint and two universal joints. If universal joints are used for both lower and upper joint an additional degree of freedom should be added. This may be achieved by rotatably connecting the rod to either one or both of the joints, where the rotation is along the axis of the rod. Push-pull rods may also comprise flexible elements, to provide off-axis compliance while maintaining an axially stiff construction. Alternatively push-pull rods may comprise two aligned rod parts wherein one part of the rod can rotate along the common axis relative to the other part of the rod by means of a central bearing assembly.

Preferably the lower joint and upper joint is a universal joint having a double sided suspension. When larger excursions are required, it may be preferred to use an upper joint consisting of a shaft that's suspended on one side for example with two preloaded bearings. Both bearings are suitably seated in a bearing housing integrated in the moving simulator frame at the connection regions. The single sided suspension allows for a wider motion range as compared to a double sided suspended shaft. In a connection region of the platform two joints may be present. The shaft of both joints are preferably positioned parallel with regard to each other.

The push-pull rod is preferably rotary connected to the lower and/or to the upper joint. Rotary connected means that the rod itself can rotate along its own axis relative to either or both lower and upper joint. This is advantageous because a certain amount of compliance can be incorporated into the push-pull rod assembly allowing even larger workspace utilization within the motion system envelope.

The motor may be an electrical motor which is movably connected to the rails by means of a rack and pinion. Examples of such a connection are described in CN107317446, WO2019/192228 and US6196081.

Preferably the motor is a linear motor, also referred to as linear electric motor. The linear motor comprises of a movable armature which interacts with a stationary magnet track as present in the endless rail. By magnetic interaction of the armature and the magnets movement of the motor along the endless rail is enabled.

The linear motor may be an iron core or air core linear electric motor. The linear motor is preferably provided with two coil packages which are connected to the motor by a structural member. In a preferred configuration, the permanent magnets are mounted on both the inner and outer surface of a vertical tubular part. From the linear motor two coil packages extends downward such that one coil package faces the magnets at the radially outward surface of the vertical tubular part and the other coil package faces the magnets at the radially inward surface of the vertical tubular part. In this configuration one coil package of the moveable motor is thus situated directly next to the magnets mounted on the inner surface of the tubular part and a second coil package is situated directly next to the magnets mounted on the outer surface of the vertical tubular part. This double-sided design keeps the linear motor compact and efficient, while minimizing vibrations and balancing out attraction forces from the magnets to the coil packages. A compact motor is advantageous because it results in a smaller arc length on the endless rail thereby increasing the available excursions of the motor and push pull rod combinations.

In an alternative configuration, the linear motor is provided with 2 coil packages which are connected by a structural member such that one coil package sits above the permanent magnets of the stationary magnets as present in the endless rail and the other coil package sits below the permanent magnets of the stationary magnets as present in the endless rail.

A problem of the movement platform of US9109743 having the rotor as part of the circular rail is the control of the motors requiring specialized servo divers. It is therefore preferred that the endless rail comprises an endless rail part of permanent magnets, an endless carriage guide rail part to which support carriages are movably connected and an endless support rail part. The linear motor is movably and functionally engaged to the endless rail comprising permanent magnets. The linear motor is connected to the support carriages and supported on the support rail by track rollers.

The endless carriage guide rail preferably runs radially outside the endless rail part of permanent magnets. The endless support rail preferably runs radially inwards from the endless rail part of permanent magnets and may run in the same or a different plane as the endless rail part of permanent magnets.

The linear motors are powered and controlled by an electrical current. For this reason each of the linear motors is preferably connected by means of a cable to a power distribution and control unit. Such a power distribution and control unit is suitably positioned in a space enclosed by the endless rail or rails. A space enclosed by the endless rail or rails is a space below or above the platform and within an imaginary column running vertically from the endless rail or rails. Preferably the power distribution and control unit is suitably positioned on the base below or alternatively above the platform and within the endless rail or rails. In order to enable an infinite yaw movement of the platform the power distribution and control unit is movable on the base allowing an infinite yaw movement.

The invention will be illustrated making use of the following non-limiting figures.

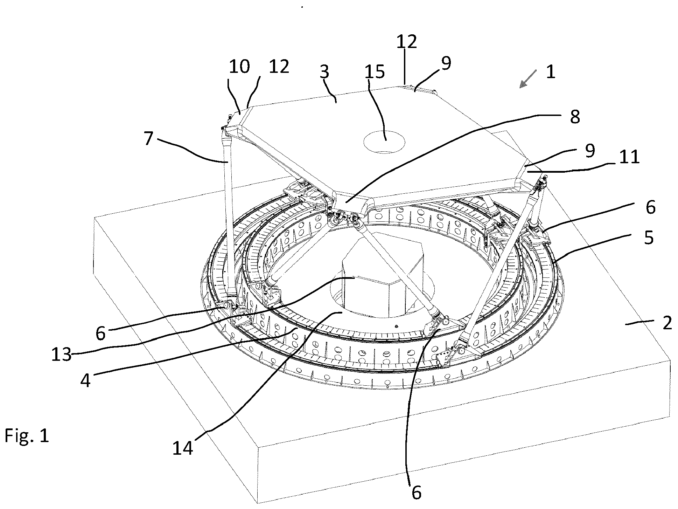

Figure 1 shows a movement platform system (1) comprising a base (2), a platform (3) movable relative to said base (2) and allowing an infinite yaw movement. The movement platform system (1) is provided with eight linear motors (6) which are each connected to the platform (3) by means of a push-pull rod (7). The shown platform (3) is movable along 6 degrees of freedom relative to base (2) and is overdetermined due to the presence of the eight push pull rods (7).

An inner circular endless rail (4) and a circular outer endless rail (5) are connected to base (2). The inner endless rail (4) and the outer endless rail (5) are positioned concentric with respect to each other. As shown the distance between the base (2) and the plane in which the inner endless rail (4) runs is larger than the distance between the base (2) and the plane in which the outer endless rail (5) runs.

Two adjacently positioned motors (6) on the inner endless rail (4) are each connected by means of a push-pull rod (7) to a first connection region (8) of platform (3). The two remaining adjacently positioned motors (6) on the inner endless rail (4) are each connected by means of a push-pull rod (7) to a third connection region (9) of the platform (3) (partly hidden by platform (3)). Two adjacently positioned motors (6) on the outer endless rail are each connected by means of a push-pull rod (7) to a second connection region (10) of the platform (3) and the two remaining adjacently positioned motors (6) on the outer endless rail (5) are each connected by means of a push-pull rod (7) to a fourth connection region (11) of the platform (3). The shown platform (3) has the shape of a rhombus and wherein the first (8), second (10), third (9) and fourth (11) connection region of the platform (3) are at the corners (12) of the rhombus.

Further a power distribution and control unit (13) is shown in a space (14) enclosed by the inner endless rail (4). The power distribution and control unit (13) is movable allowing an infinite yaw movement. Between the power distribution and control unit (13) cables may run to each motor (6) via opening (15) in platform (3) and push-pull rods (7).

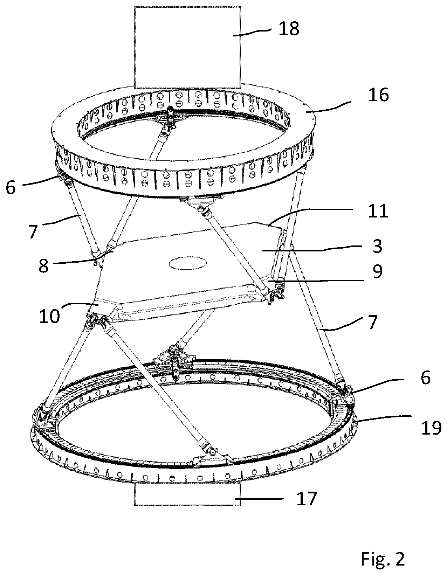

Figure 2 shows a movement platform as in figure 1 except in that the inner endless rail is now positioned above platform (3) as a first endless rail (16) and connected to a second base (18). The outer endless rail (5) of Figure 1 is now a second endless rail (19) connected to a first base (17). The bases (17) and (18) are schematically drawn for clarity reasons. The dimensions of first and second endless rails (16,19) may be as shown in Figure 1.

Two adjacently positioned motors (6) on the first endless rail (16) are each connected by means of a push-pull rod (7) to the first connection region (8) of platform (3). The two remaining adjacently positioned motors (6) on the first endless rail (16) are each connected by means of a push-pull rod (7) to the third connection region (9) of the platform (3). Two adjacently positioned motors (6) on the second endless rail (19) are each connected by means of a push-pull rod (7) to the second connection region (10) of the platform (3) and the two remaining adjacently positioned motors (6) on the second endless rail (19) are each connected by means of a push-pull rod (7) to a fourth connection region (11) of the platform (3). Figure 2 does not show the power distribution and control unit for clarity reasons.

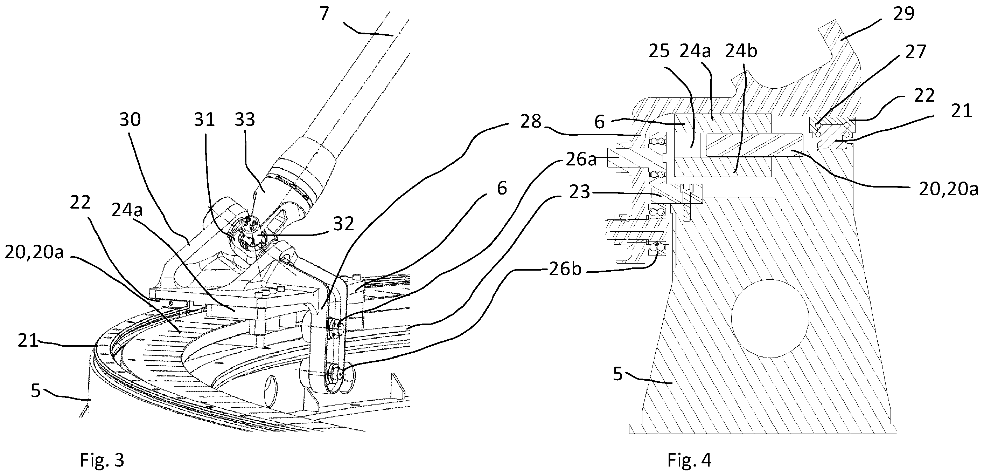

Figure 3 and 4 shows the linear motor (6) as movable connected to an endless rail (5). The endless rail (5) has endless rail part (20) of permanent magnets (20a), an endless carriage guide rail part (21) to which two support carriages (22) (of which one is visible) are movably connected. The endless carriage guide rail part (21) and its carriages support the linear motor (6) at its radial outer end. The linear motor (6) is movably and functionally engaged to the endless rail part (20) of permanent magnets. The linear motor is provided with 2 coil packages (24a,24b) which are connected by a structural member (25) such that one coil package (24a) sits above the permanent magnets (20a) of the stationary stator and the other coil package(24b) sits below the permanent magnets (20a). The linear motor (6) is connected to the two support carriages. The support carriages are filled with recirculating balls (27).

The guide rail part (21) guides the motor along the endless rail (5). The guide rail part (21) is radially outside the endless rail part (20) of permanent magnets (20a). The linear motor (6) is further supported at its radial inner side on a support rail (23) by track rollers (26a,26b). The track rollers (26a,26b) are connected to the motor by a downwardly extending arm (28). In this way the arm and track rollers provide additional vertical support for the linear motor (6). The support rail (23) may be a hardened and precision grinded ring. Not shown but preferably some sort of positioning measurement is provided for the motors. This may comprise of read strips present on the endless rail and a read head present as part of the motor. The read head is positioned such that it can detect the read strip and determine the position of the motor on the endless rail.

Figure 3 also shows a universal joint as lower joint (30) having a lower fork (29) bolted onto the electrical motor (6). Figure 4 only shows part of the lower fork (29). A lower joint shaft (31) runs through lower fork (29). In a perpendicular direction a pin (32) runs through the lower joint shaft (31). At its ends the pin (32) is connected to a rod fork (33) which is rotatable connected to the lower end of push pull rod (7) allowing the push pull rod (7) to rotate along its axis relative to rod fork (33).

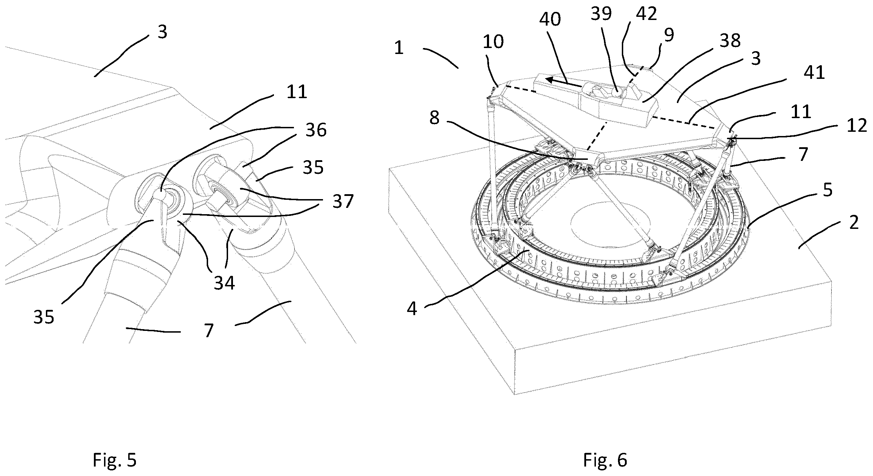

Figure 5 shows a pair of universal joints as upper joints (34) at a connection region (11) consisting of a fork (35), pin (36) and a shaft (37). The upper ends of push pull rods (7) consists of the fork (35). Through this fork (35) the pin (36) runs and rotatable fixes the end of the shaft (37). Shaft (37) is suspended in a bearing housing which is part of the connection region (11). This design allows for a wide motion range when compared to when a universal joint of Figure 3 would have been used as upper joint.

Figure 6 shows the movement platform system (1) of Figure 1 provided with a seat (38) for a driver (39) defining a driving direction (40) for the driver which is in line with a line (41) running from the second (10) and fourth (12) connection region. The imaginary line (41) connecting the second (10) and fourth (12) connection region crosses perpendicular an imaginary line (42) connecting the first (8) and third (9) connection region directly or in their projection on the platform (3). The distance between the first (8) and third (9) connection region is smaller than the distance between the second (10) and fourth (11) connection region. The shown platform (3) has the shape of a rhombus and wherein the first (8), second (10), third (9) and fourth (11) connection region of the platform (3) are at the corners (12) of the rhombus.

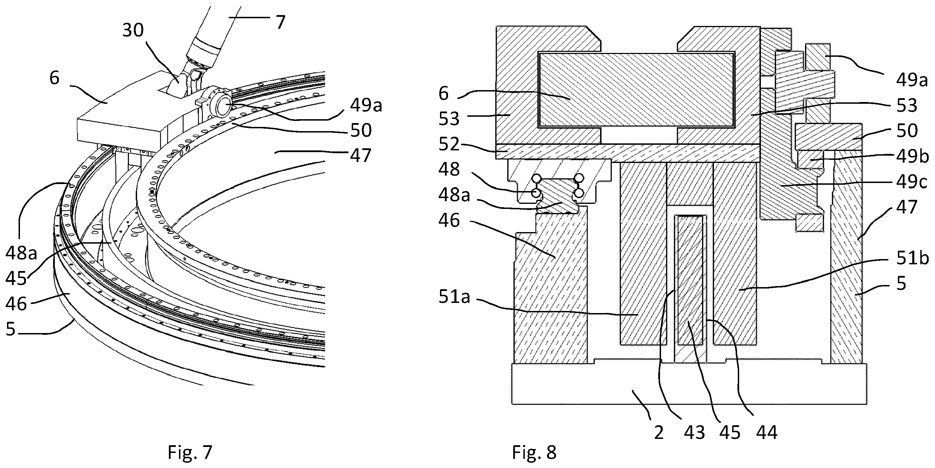

Figure 7 and 8 show an alternative design for movably connecting the linear motor (6) to an endless rail (5). Figure 7 is a three dimensional view of a section of the endless rail (5) showing motor (6). Figure 8 is a cross-section of the endless rail (5) and motor (6) of Figure 7. Permanent magnets (43, 44) are mounted on both the inner and outer surface of a vertical tubular part (45) as the endless rail part of permanent magnets. As an endless carriage guide rail part an outer tubular support part (46) is present at the radially outward side of the vertical tubular part (45). As an endless support rail part an inner tubular support part (47) is present at the radially inward side of the vertical tubular part (45). All three tubular parts form the endless rail (4,5) and are connected to a base (2). A linear motor (6) is movably connected to the outer tubular support part (46) and an inner tubular support part (47). The motor (6) is connected to the outer tubular support part (46) by means of a support carriage (48) as part of the motor and a guide rail (48a) present at the upper end of the outer tubular part (46). The motor (6) is connected to the inner tubular support part (47) by means of track rollers (49a,49b) via a downwardly extending arm (49c), which track rollers (49a,49b) move along a horizontal support rail (50) as mounted at the upper end of the inner tubular support part (47). The motor is further provided with 2 coil packages (51a,51b) which extend downward from a carriage base plate (52) which is part of the motor (6) such that one coil package (51a) faces the magnets (43) at the radially outward surface of the vertical tubular part (45) and the other coil package (51b) faces the magnets (44) at the radially inward surface of the vertical tubular part (45). A lower joint (30) of an universal joint and part of the push pull rod (7) is shown as present in bearing housing (53). In Figure 8 the cross-sectional details of lower joint (30) are not shown for clarity reasons.

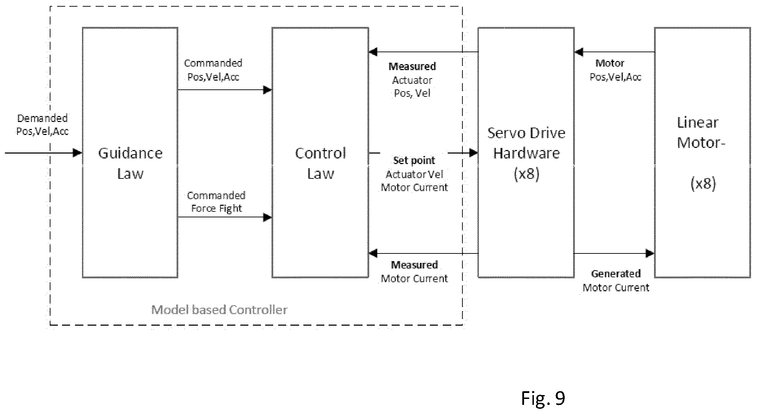

Figure 9 illustrates how the controller of a platform system (1) according to Figure 1 may communicate with the eight linear motors (6). A host computer generates a demanded platform movement set-point in platform position, velocity and acceleration. This set-point may be adjusted by an optional motion cueing filter to obtain a filtered set-point (not shown). The controller is divided into two elements, namely the Guidance Law and the Control Law. The Guidance law accepts the demanded platform movement set-point in platform position, velocity and acceleration from an external host computer. The demanded set-point is transformed into a commanded set-point for the position velocity and acceleration of the platform and a force-fight set-point in for the linear motors. The Guidance Law is designed such that no operational or physical limits are exceeded when the platform (3) is moved in accordance to these set-points.

The objective of the Control Law in Figure 9 is to move the motion platform (3) in accordance to the commanded set-point as commanded by the Guidance Law. The platform system of Figure 1 can be characterized as a multiple channel (i.e. multiple degrees of freedom), over-determined system (more motors than degrees of freedom) which are highly cross-coupled. The Control Law (CL) is designed as a Multiple Input Multiple Output controller with feed-forward and feedback paths which is designed to decouple the cross-couplings between the degrees of freedom and handle force-fight issues which originate from having more actuators than degrees of freedom. This is further described in WO2017/202920 for an overdetermined movement system comprising actuators.

## Claims

1. An overdetermined movement platform system (1), comprising one or more bases (2, 17, 18), a platform (3) movable along six degrees of freedom relative to said one or more bases (2, 17, 18) with an infinite rotational movement, two endless rails (4, 5, 16, 19) following a closed curve, wherein the two endless rails (4, 5) have different diameters and are connected to one single base (2) or wherein one endless rail (19) is connected to a first base (17) and another endless rail (16) is connected to a second base (18), wherein to each endless rail (4, 5, 16, 19) four or more motors (6) are movably connected and wherein each motor (6) is connected to the platform (3) by means of a push-pull rod (7).

2. A movement platform system (1) according to claim 1, wherein the infinite rotational movement is an infinite yaw movement.

3. A movement platform system (1) according to any one of claims 1-2, wherein the two endless rails (4, 5, 16, 19) have a circular shape.

4. A movement platform system (1) according to any one of claims 1-3, wherein the two endless rails (4, 5, 16, 19) are circular shaped endless rails (4, 5, 16, 19) having a center and wherein the two endless rails (4, 5, 16, 19) run in the same plane or in a parallel plane and wherein a common axis runs through both centers in a direction perpendicular to the plane or planes.

5. A movement platform system (1) according to claim 4, wherein the platform (3) is movable along six degrees of freedom relative to the single base (2), wherein the two endless rails (4, 5) having different diameters define an inner rail (4) and an outer rail (5) and wherein the distance between the single base (2) and the plane in which the inner rail (4) runs is larger than the distance between the base (2) and the plane in which the outer rail (5) runs.

6. A movement platform system (1) according to any one of claims 1-4, wherein one endless rail (19) following a closed curve is connected to a first base (17) and another endless rail (16) following a closed curve is connected to a second base (18) and wherein the movable platform (3) is positioned between said first (17) and second base (18).

7. A movement platform system (1) according to any one of claims 1-6, wherein only two endless rails (4, 5, 16, 19) are present and wherein to each endless rail (4, 5, 16, 19) only four motors (6) are movably connected.

8. A movement platform system (1) according to claim 7, wherein the platform (3) has four connection regions (8, 9, 10, 11) which are spaced apart from each other on the platform (3) and wherein
two adjacently positioned motors (6) on a first endless rail (16) of the two endless rails (16, 19) are each connected by means of a push-pull rod (7) to a first connection region (8) of the platform (3),
the two remaining adjacently positioned motors (6) on the first endless rail (16) are each connected by means of a push-pull rod (7) to a third connection region (9) of the platform (3)
two adjacently positioned motors (6) on a second endless rail (19) of the two endless rails (16, 19) are each connected by means of a push-pull rod (7) to a second connection region (10) of the platform (3), and
the two remaining adjacently positioned motors (6) on the second endless rail (19) are each connected by means of a push-pull rod (7) to a fourth connection region (11) of the platform (3) and
wherein an imaginary line (42) connecting the first (8) and third (9) connection region crosses an imaginary line (41) connecting the second (10) and fourth (12) connection region directly or in their projection on the platform (3).

9. A movement platform system (1) according to claim 8, wherein the imaginary line (42) connecting the first (8) and third connection region (9) crosses the imaginary line (41) connecting the second (10) and fourth connection region (11) perpendicularly.

10. A movement platform system (1) according to claim 9, wherein the distance between the first (8) and third connection region (9) is smaller than the distance between the second (10) and fourth connection region (11).

11. A movement platform system (1) according to claim 10, wherein the platform (3) has the shape of a rhombus and wherein the first (8), second (10), third (9) and fourth connection region (11) of the platform (3) are at the corners (12) of the rhombus.

12. A movement platform system (1) according to any one of claims 10-11,
wherein the platform (3) is provided with a seat (38) for a driver (39) defining a driving direction (40) for the driver (39) which is in line with the imaginary line (41) connecting the second (10) and fourth connection region (11).

13. A movement platform system (1) according to any one of claims 1-12,
wherein the push-pull rod (7) connecting each motor (6) to the platform (3) is connected to said motor (6) by means of a three degrees of freedom lower joint (30) and is connected to the platform (3) with a two degrees of freedom upper joint or wherein the push-pull rod (7) connecting each motor (6) to the platform (3) is connected to said motor (6) by means of a two degrees of freedom lower joint (30) and is connected to the platform (3) with a three degrees of freedom upper joint.

14. A movement platform system (1) according to any one of claims 1-13, wherein each motor (6) is an electrical motor which is movably connected to the corresponding endless rail (4, 5, 16, 19) by means of a rack and pinion.

15. A movement platform system (1) according to any one of claims 1-14,
wherein each motor (6) is a linear electric motor.

16. A movement platform system (1) according to claim 15, wherein each endless rail (4, 5) comprises an endless rail part (20) of permanent magnets (20a), an endless carriage guide rail part (21) to which support carriages (22) are movably connected and an endless support rail part (23) and wherein the linear motor (6) is movably and functionally engaged to said endless rail (4, 5, 16, 19) comprising permanent magnets (20a), wherein the linear motor (6) is connected to the support carriages (22) and supported on the endless support rail part (23) by track rollers (26a, 26b).

17. A movement platform system (1) according to claim 16, wherein the permanent magnets (43, 44) are mounted on both the inner and outer surface of a vertical tubular part (45) , wherein the endless carriage guide rail part (21) is an outer tubular support part (46) present at the radially outward side of the vertical tubular part (45), wherein the endless support rail part (23) is an inner tubular support part (47) present at the radially inward side of the vertical tubular part (45) and wherein from the linear motor (6) two coil packages (51a, 51b) extends downward such that one coil package (51a) faces the magnets (43) at the radially outward surface of the vertical tubular part (45) and the other coil package (51b) faces the magnets (44) at the radially inward surface of the vertical tubular part (45).

18. A movement platform system (1) according to any one of claims 14-17, wherein a power distribution and control unit (13) for the eight or more motors (6) is present in a space (14) enclosed by the two endless rails (4, 5), wherein the power distribution and the control unit (13) is individually connected to each of the eight or more motors (6) by means of one or more cables and wherein the power distribution and control unit (13) is movable allowing an infinite yaw movement.

19. A movement platform system (1) according to any one of claims 1-5 or claims 7-18 wherein the two endless rails (4, 5) having different diameters and following a closed curve are connected to the single base (2) thereby defining an inner rail (4) and an outer rail (5) and wherein one or more cables connect the four motors (6) which are movably connected to the outer rail with the power distribution and control unit (13) and wherein one or more cables run from each motor (6) via the push-pull rod (7) connecting said motor (6) to the platform (3) and from the platform (3) to the power distribution and a control unit (13).

20. A movement platform system (1) according to claim 19, wherein the power distribution and control unit (13) is movably positioned on the single base (2) allowing an infinite yaw movement.

## Patentansprüche

1. Überbestimmtes Bewegungsplattformsystem (1), umfassend eine oder mehrere Basen (2, 17, 18) einer Plattform (3), die relativ zu der einen oder den mehreren Basen (2, 17, 18) mit einer unendlichen Drehbewegung entlang sechs Freiheitsgraden beweglich ist, zwei Endlosschienen (4, 5, 16, 19), die einer geschlossenen Kurve folgen, wobei die beiden Endlosschienen (4, 5) unterschiedliche Durchmesser aufweisen und mit einer einzelnen Basis (2) verbunden sind, oder wobei eine Endlosschiene (19) mit einer ersten Basis (17) verbunden ist und eine andere Endlosschiene (16) mit einer zweiten Basis (18) verbunden ist, wobei mit jeder Endlosschiene (4, 5, 16, 19) vier oder mehr Motoren (6) beweglich verbunden sind, und wobei jeder Motor (6) mittels einer Schub-Zug-Stange (7) mit der Plattform (3) verbunden ist.

2. Bewegungsplattformsystem (1) nach Anspruch 1, wobei die unendliche Drehbewegung eine unendliche Gierbewegung ist.

3. Bewegungsplattformsystem (1) nach einem der Ansprüche 1 bis 2, wobei die beiden Endlosschienen (4, 5, 16, 19) eine kreisförmige Form aufweisen.

4. Bewegungsplattformsystem (1) nach einem der Ansprüche 1 bis 3, wobei die beiden Endlosschienen (4, 5, 16, 19) kreisförmige Endlosschienen (4, 5, 16, 19) mit einem Mittelpunkt sind und wobei die beiden Endlosschienen (4, 5,16, 19) in derselben Ebene oder in einer parallelen Ebene verlaufen, und wobei eine gemeinsame Achse durch beide Mittelpunkte in einer Richtung senkrecht zu der Ebene oder den Ebenen verläuft.

5. Bewegungsplattformsystem (1) nach Anspruch 4, wobei die Plattform (3) entlang sechs Freiheitsgraden relativ zu der einzelnen Basis (2) beweglich ist, wobei die beiden Endlosschienen (4, 5) mit unterschiedlichen Durchmessern eine innere Schiene (4) und eine äußere Schiene (5) definieren, und wobei der Abstand zwischen der einzelnen Basis (2) und der Ebene, in der die innere Schiene (4) verläuft, größer ist als der Abstand zwischen der Basis (2) und der Ebene, in der die äußere Schiene (5) verläuft.

6. Bewegungsplattformsystem (1) nach einem der Ansprüche 1 bis 4, wobei eine Endlosschiene (19), die einer geschlossenen Kurve folgt, mit einer ersten Basis (17) verbunden ist und eine weitere Endlosschiene (16), die einer geschlossenen Kurve folgt, mit einer zweiten Basis (18) verbunden ist, und wobei die bewegliche Plattform (3) zwischen der ersten (17) und der zweiten Basis (18) positioniert ist.

7. Bewegungsplattformsystem (1) gemäß einem der Ansprüche 1 bis 6, wobei nur zwei Endlosschienen (4, 5, 16, 19) vorhanden sind und wobei mit jeder Endlosschiene (4, 5, 16, 19) nur vier Motoren (6) beweglich verbunden sind.

8. Bewegungsplattformsystem (1) nach Anspruch 7, wobei die Plattform (3) vier Verbindungsbereiche (8, 9, 10, 11) aufweist, die auf der Plattform (3) voneinander beabstandet sind, und wobei
zwei benachbart positionierte Motoren (6) auf einer ersten Endlosschiene (16) der beiden Endlosschienen (16, 19) jeweils mittels einer Schub-Zug-Stange (7) mit einem ersten Verbindungsbereich (8) der Plattform (3) verbunden sind,
die beiden verbleibenden benachbart positionierten Motoren (6) auf der ersten Endlosschiene (16) jeweils mittels einer Schub-Zug-Stange (7) mit einem dritten Verbindungsbereich (9) der Plattform (3) verbunden sind,
zwei benachbart positionierte Motoren (6) auf einer zweiten Endlosschiene (19) der beiden Endlosschienen (16, 19) jeweils mittels einer Schub-Zug-Stange (7) mit einem zweiten Verbindungsbereich (10) der Plattform (3) verbunden sind, und
die beiden verbleibenden benachbart positionierten Motoren (6) auf der zweiten Endlosschiene (19) jeweils mittels einer Schub-Zug-Stange (7) mit einem vierten Verbindungsbereich (11) der Plattform (3) verbunden sind, und
wobei eine gedachte Linie (42), die den ersten (8) und dritten (9) Verbindungsbereich verbindet, eine gedachte Linie (41) schneidet, die den zweiten (10) und vierten (12) Verbindungsbereich direkt oder in ihrer Projektion auf die Plattform (3) verbindet.

9. Bewegungsplattformsystem (1) nach Anspruch 8, wobei die gedachte Linie (42), die den ersten (8) und dritten Verbindungsbereich (9) verbindet, die gedachte Linie (41), die den zweiten (10) und vierten Verbindungsbereich (11) verbindet, senkrecht schneidet.

10. Bewegungsplattformsystem (1) nach Anspruch 9, wobei der Abstand zwischen dem ersten (8) und dem dritten Verbindungsbereich (9) kleiner ist als der Abstand zwischen dem zweiten (10) und dem vierten Verbindungsbereich (11).

11. Bewegungsplattformsystem (1) nach Anspruch 10, wobei die Plattform (3) die Form eines Rhombus hat und wobei der erste (8), zweite (10), dritte (9) und vierte Verbindungsbereich (11) der Plattform (3) an den Ecken (12) des Rhombus liegen.

12. Bewegungsplattformsystem (1) nach einem der Ansprüche 10 bis 11, wobei die Plattform (3) mit einem Sitz (38) für einen Fahrer (39) versehen ist, der eine Fahrtrichtung (40) für den Fahrer (39) definiert, die mit der gedachten Linie (41) übereinstimmt, die den zweiten (10) und den vierten Verbindungsbereich (11) verbindet.

13. Bewegungsplattformsystem (1) nach einem der Ansprüche 1 bis 12, wobei die Schub-Zug-Stange (7), die jeden Motor (6) mit der Plattform (3) verbindet, mit dem Motor (6) mittels eines unteren Gelenks (30) mit drei Freiheitsgraden verbunden ist und mit der Plattform (3) über ein oberes Gelenk mit zwei Freiheitsgraden verbunden ist, oder wobei die Schub-Zug-Stange (7), die jeden Motor (6) mit der Plattform (3) verbindet, mit dem Motor (6) über ein unteres Gelenk (30) mit zwei Freiheitsgraden verbunden ist und mit der Plattform (3) über ein oberes Gelenk mit drei Freiheitsgraden verbunden ist.

14. Bewegungsplattformsystem (1) nach einem der Ansprüche 1 bis 13, wobei jeder Motor (6) ein Elektromotor ist, der mit der entsprechenden Endlosschiene (4, 5, 16, 19) mittels eines Zahnstangengetriebes beweglich verbunden ist.

15. Bewegungsplattformsystem (1) nach einem der Ansprüche 1 bis 14, wobei jeder Motor (6) ein elektrischer Linearmotor ist.

16. Bewegungsplattformsystem (1) nach Anspruch 15, wobei jede Endlosschiene (4, 5) einen Endlosschienenteil (20) aus Permanentmagneten (20a), einen Endlos-Schlittenführungsschienenteil (21), mit dem Stützschlitten (22) beweglich verbunden sind, und einen Endlos-Stützschienenteil (23) umfasst, und wobei der Linearmotor (6) beweglich und funktionsfähig mit der Endlosschiene (4, 5, 16, 19), die Permanentmagneten (20a) umfasst, in Eingriff steht, wobei der Linearmotor (6) mit den Stützschlitten (22) verbunden ist und auf dem Endlos-Stützschienenteil (23) durch Laufrollen (26a, 26b) abgestützt ist.

17. Bewegungsplattformsystem (1) nach Anspruch 16, wobei die Permanentmagnete (43, 44) sowohl an der Innen- als auch an der Außenfläche eines vertikalen Rohrteils (45) montiert sind, wobei das Endlos-Schlittenführungsschienenteil (21) ein äußeres Rohrstützteil (46) ist, das an der radial äußeren Seite des vertikalen Rohrteils (45) vorhanden ist, wobei das Endlos-Stützschienenteil (23) ein inneres Rohrstützteil (47) ist, das an der radial inneren Seite des vertikalen Rohrteils (45) vorhanden ist, und wobei sich von dem Linearmotor (6) zwei Spulenpakete (51a, 51b) nach unten so erstrecken, dass ein Spulenpaket (51a) den Magneten (43) an der radial äußeren Oberfläche des vertikalen Rohrteils (45) zugewandt ist und das andere Spulenpaket (51b) den Magneten (44) an der radial inneren Oberfläche des vertikalen Rohrteils (45) zugewandt ist.

18. Bewegungsplattformsystem (1) nach einem der Ansprüche 14 bis 17, wobei eine Stromverteilungs- und Steuereinheit (13) für die acht oder mehr Motoren (6) in einem von den beiden Endlosschienen (4, 5) umschlossenen Raum (14) vorhanden ist, wobei die Stromverteilungs- und Steuereinheit (13) einzeln mit jedem der acht oder mehr Motoren (6) mittels eines oder mehrerer Kabel verbunden ist und wobei die Stromverteilungs- und Steuereinheit (13) beweglich ist und eine unendliche Gierbewegung ermöglicht.

19. Bewegungsplattformsystem (1) nach einem der Ansprüche 1 bis 5 oder 7 bis 18, wobei die beiden Endlosschienen (4, 5), die unterschiedliche Durchmesser aufweisen und einer geschlossenen Kurve folgen, mit der einzelnen Basis (2) verbunden sind und dadurch eine innere Schiene (4) und eine äußere Schiene (5) definieren, und wobei ein oder mehrere Kabel die vier Motoren (6), die beweglich mit der äußeren Schiene verbunden sind, mit der Energieverteilungs- und Steuereinheit (13) verbinden, und wobei ein oder mehrere Kabel von jedem Motor (6) über die Schub-Zug-Stange (7), die den Motor (6) mit der Plattform (3) verbindet, und von der Plattform (3) zu der Energieverteilungs- und Steuereinheit (13) verlaufen.

20. Bewegungsplattformsystem (1) nach Anspruch 19, wobei die Energieverteilungs- und Steuereinheit (13) beweglich auf der einzelnen Basis (2) positioniert ist und eine stufenlose Gierbewegung ermöglicht.

## Revendications

1. Système de plateforme de mouvement (1) surdéterminé, comprenant une ou plusieurs bases (2, 17, 18), une plateforme (3) mobile selon six degrés de liberté par rapport à ladite ou auxdites bases (2, 17, 18) avec un mouvement de rotation infini, deux rails sans fin (4, 5, 16, 19) suivant une courbe fermée, dans lequel les deux rails sans fin (4, 5) ont des diamètres différents et sont reliés à une base unique (2) ou dans lequel un rail sans fin (19) est relié à une première base (17) et un autre rail sans fin (16) est relié à une seconde base (18), dans lequel, à chaque rail sans fin (4, 5, 16, 19), quatre moteurs ou plus (6) sont reliés de manière mobile, et dans lequel chaque moteur (6) est relié à la plateforme (3) au moyen d'une bielle va-et-vient (7).

2. Système de plateforme de mouvement (1) selon la revendication 1, dans lequel le mouvement de rotation infini est un mouvement de lacet infini.

3. Système de plateforme de mouvement (1) selon l'une quelconque des revendications 1 à 2, dans lequel les deux rails sans fin (4, 5, 16, 19) ont une forme circulaire.

4. Système de plateforme de mouvement (1) selon l'une quelconque des revendications 1 à 3, dans lequel les deux rails sans fin (4, 5, 16, 19) sont des rails sans fin de forme circulaire (4, 5, 16, 19) ayant un centre, et dans lequel les deux rails sans fin (4, 5, 16, 19) s'étendent dans le même plan ou dans un plan parallèle, et dans lequel un axe commun passe par les deux centres dans une direction perpendiculaire au ou aux plans.

5. Système de plateforme de mouvement (1) selon la revendication 4, dans lequel la plateforme (3) est mobile selon six degrés de liberté par rapport à la base unique (2), dans lequel les deux rails sans fin (4, 5) ayant des diamètres différents définissent un rail intérieur (4) et un rail extérieur (5), et dans lequel la distance entre la base unique (2) et le plan dans lequel le rail intérieur (4) s'étend est supérieure à la distance entre la base (2) et le plan dans lequel le rail extérieur (5) s'étend.

6. Système de plateforme de mouvement (1) selon l'une quelconque des revendications 1 à 4, dans lequel un rail sans fin (19) suivant une courbe fermée est relié à une première base (17) et un autre rail sans fin (16) suivant une courbe fermée est relié à une seconde base (18), et dans lequel la plateforme de mouvement (3) est positionnée entre ladite première base (17) et ladite seconde base (18).

7. Système de plateforme de mouvement (1) selon l'une quelconque des revendications 1 à 6, dans lequel seuls deux rails sans fin (4, 5, 16, 19) sont présents, et dans lequel, à chaque rail sans fin (4, 5, 16, 19), seuls quatre moteurs (6) sont reliés de manière mobile.

8. Système de plateforme de mouvement (1) selon la revendication 7, dans lequel la plateforme (3) a quatre régions de raccordement (8, 9, 10, 11) qui sont espacées les unes des autres sur la plateforme (3), et dans lequel deux moteurs (6) positionnés de manière adjacente sur un premier rail sans fin (16) des deux rails sans fin (16, 19) sont chacun reliés au moyen d'une bielle va-et-vient (7) à une première région de raccordement (8) de la plateforme (3),
les deux moteurs restants (6) positionnés de manière adjacente sur le premier rail sans fin (16) sont chacun reliés au moyen d'une bielle va-et-vient (7) à une troisième région de raccordement (9) de la plateforme (3)
deux moteurs (6) positionnés de manière adjacente sur un second rail sans fin (19) des deux rails sans fin (16, 19) sont chacun reliés au moyen d'une bielle va-et-vient (7) à une deuxième région de raccordement (10) de la plateforme (3), et
les deux moteurs restants (6) positionnés de manière adjacente sur le second rail sans fin (19) sont chacun reliés au moyen d'une bielle va-et-vient (7) à une quatrième région de raccordement (11) de la plateforme (3), et
dans lequel une ligne imaginaire (42) reliant la première (8) et la troisième (9) régions de raccordement croise une ligne imaginaire (41) reliant la deuxième (10) et la quatrième (12) régions de raccordement, directement, ou dans leur projection sur la plateforme (3).

9. Système de plateforme de mouvement (1) selon la revendication 8, dans lequel la ligne imaginaire (42) reliant la première (8) et la troisième (9) régions de raccordement croise perpendiculairement la ligne imaginaire (41) reliant la deuxième (10) et la quatrième (11) régions de raccordement.

10. Système de plateforme de mouvement (1) selon la revendication 9, dans lequel la distance entre la première (8) et la troisième (9) régions de raccordement est inférieure à la distance entre la deuxième (10) et la quatrième (11) régions de raccordement.

11. Système de plateforme de mouvement (1) selon la revendication 10, dans lequel la plateforme (3) a la forme d'un losange, et dans lequel la première (8), la deuxième (10), la troisième (9) et la quatrième (11) régions de raccordement de la plateforme (3) sont situées aux coins (12) du losange.

12. Système de plateforme de mouvement (1) selon l'une quelconque des revendications 10 à 11, dans lequel la plateforme (3) est pourvue d'un siège (38) pour un conducteur (39) définissant une direction de conduite (40), pour le conducteur (39), qui est conforme à la ligne imaginaire (41) reliant la deuxième (10) et la quatrième (11) régions de raccordement.

13. Système de plateforme de mouvement (1) selon l'une quelconque des revendications 1 à 12, dans lequel la bielle va-et-vient (7) reliant chaque moteur (6) à la plateforme (3) est reliée audit moteur (6) au moyen d'un raccord inférieur à trois degrés de liberté (30) et est reliée à la plateforme (3) par un raccord supérieur à deux degrés de liberté, ou dans lequel la bielle va-et-vient (7) reliant chaque moteur (6) à la plateforme (3) est reliée audit moteur (6) au moyen d'un raccord inférieur à deux degrés de liberté (30) et est reliée à la plateforme (3) par un raccord supérieur à trois degrés de liberté.

14. Système de plateforme de mouvement (1) selon l'une quelconque des revendications 1 à 13, dans lequel chaque moteur (6) est un moteur électrique qui est relié de manière mobile au rail sans fin (4, 5, 16, 19) correspondant au moyen d'un pignon et d'une crémaillère.

15. Système de plateforme de mouvement (1) selon l'une quelconque des revendications 1 à 14, dans lequel chaque moteur (6) est un moteur électrique linéaire.

16. Système de plateforme de mouvement (1) selon la revendication 15, dans lequel chaque rail sans fin (4, 5) comprend une partie de rail sans fin (20) comprenant des aimants permanents (20a), une partie de rail de guidage de chariot sans fin (21) à laquelle des chariots de support (22) sont reliés de manière mobile et une partie de rail de support sans fin (23), et dans lequel le moteur linéaire (6) est engagé de manière mobile et fonctionnelle avec ledit rail sans fin (4, 5, 16, 19) comprenant des aimants permanents (20a), dans lequel le moteur linéaire (6) est relié aux chariots de support (22) et supporté sur la partie de rail de support sans fin (23) par des galets de roulement (26a, 26b).

17. Système de plateforme de mouvement (1) selon la revendication 16, dans lequel les aimants permanents (43, 44) sont montés à la fois sur la surface intérieure et sur la surface extérieure d'une partie tubulaire verticale (45), dans lequel la partie de rail de guidage de chariot sans fin (21) est une partie de support tubulaire extérieure (46) présente sur le côté radialement extérieur de la partie tubulaire verticale (45), dans lequel la partie de rail de support sans fin (23) est une partie de support tubulaire intérieure (47) présente sur le côté radialement intérieur de la partie tubulaire verticale (45), et dans lequel, à partir du moteur linéaire (6), deux blocs de bobinage (51a, 51b) s'étendent vers le bas, de sorte qu'un bloc de bobinage (51a) fait face aux aimants (43) au niveau de la surface radialement extérieure de la partie tubulaire verticale (45) et que l'autre bloc de bobinage (51b) fait face aux aimants (44) au niveau de la surface radialement intérieure de la partie tubulaire verticale (45).

18. Système de plateforme de mouvement (1) selon l'une quelconque des revendications 14 à 17, dans lequel une unité de commande et de distribution de puissance (13) pour les huit moteurs ou plus (6) est présente dans un espace (14) délimité par les deux rails sans fin (4, 5), dans lequel l'unité de commande et de distribution de puissance (13) est reliée individuellement à chacun des huit moteurs ou plus (6) au moyen d'un ou plusieurs câbles, et dans lequel l'unité de commande et de distribution de puissance (13) est mobile, ce qui permet un mouvement de lacet infini.

19. Système de plateforme de mouvement (1) selon l'une quelconque des revendications 1 à 5 ou 7 à 18, dans lequel les deux rails sans fin (4, 5) ayant des diamètres différents et suivant une courbe fermée sont reliés à la base unique (2), définissant ainsi un rail intérieur (4) et un rail extérieur (5), et dans lequel un ou plusieurs câbles relient les quatre moteurs (6), qui sont reliés de manière mobile au rail extérieur, à l'unité de commande et de distribution de puissance (13), et dans lequel un ou plusieurs câbles s'étendent depuis chaque moteur (6) par l'intermédiaire de la bielle va-et-vient (7) reliant ledit moteur (6) à la plateforme (3), et depuis la plateforme (3) à l'unité de commande et de distribution de puissance (13).

20. Système de plateforme de mouvement (1) selon la revendication 19, dans lequel l'unité de commande et de distribution de puissance (13) est positionnée de manière mobile sur la base unique (2), ce qui permet un mouvement de lacet infini.
